# EUROPEAN PATENT APPLICATION

(11) **EP 0 919 888 A1**
(43) Date of publication of application: **02.06.1999**
(21) Application number: 98919551.6
(22) Date of filing: 11.05.1998
(51) Int. Cl.: G05B 9/02, H04L 1/22, G08C 25/00

(54) **DATA TRANSFER APPARATUS**

(30) Priority: 09.05.1997 JP 134510/97
(71) Applicant: FANUC LTD, Minamitsuru-gun, Yamanashi 401-0597 (JP)
(72) Inventor: KINOSHITA, Jiro-Room 6-210,Fanuc Manshonharimomi, Minamitsuru-gun,Yamanashi 401-0511 (JP); KUMAKURA, Tatsuro, Shizuoka 412-0026 (JP); HIROHAMA, Hideyuki-Fanuc Dai3virakaramatsu, Minamitsuru-gun,Yamanashi 401-0511 (JP)
(74) Representative: Billington, Lawrence Emlyn
(86) International application number: JP9802076
(87) International publication number: WO9852108

(57) **Abstract**

A data transfer apparatus wherein a double switch system is adopted for safety. Two pieces of data inputted through a switch to a DI/DO control circuit (2) for peripheral devices are converted into serial data by circuits (Ar, Br), and the converted serial data are combined into a single piece of serial data by a circuit (Cr). The serial data is sent to a communication control section (1) of a CNC via a transmission line (3a). The section (1) divides the received serial data into two pieces of serial data, and converts each of the divided pieces of serial data into parallel data.

## Description

### TECHNICAL FIELD

The present invention relates to a data transmission apparatus in a system, which is provided with duplicated input-output circuits, sensors, switches, relays, etc. for the sake of safety of data transmission and reception between a controller for controlling a machine or device, such as a numerical control device (CNC device), and the input-output circuit that is used to control peripheral equipment of the machine or device, and which transmits and receives data in a duplicate manner.

### BACKGROUND ART

In a machine or device, such as a CNC machine tool or robot, signals sometimes may be generated unexpectedly due to failure in sensors, switches, or relay DI/DO control circuits, during communication between a controller, such as CNC, and peripheral equipment, thereby causing wrong operations of the machine or device and its peripheral equipment. To prevent this and secure safety, a method is used such that data communication lines, as well as the sensors, switches, relay DI/DO control circuits, etc., are duplicated.

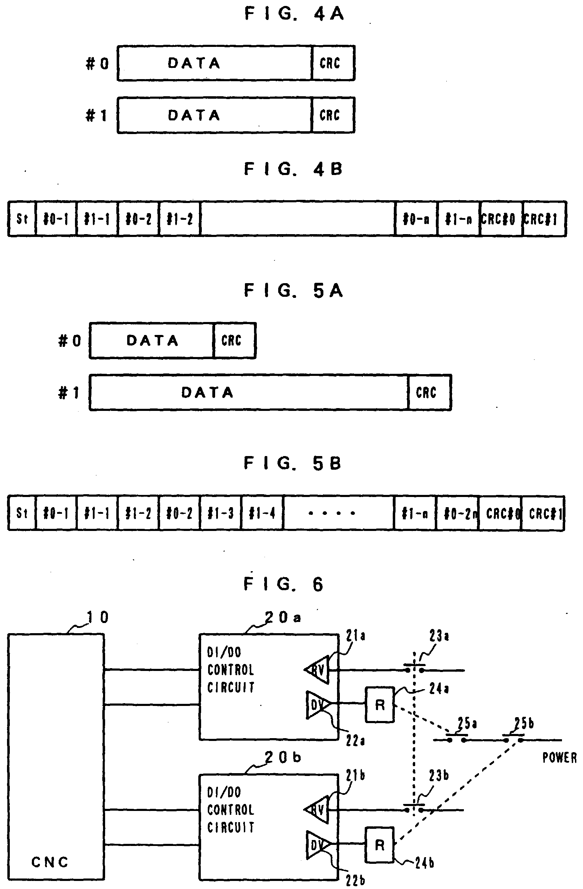

FIG. 6 shows an example of a conventional system for duplicating a data communication line and the like to enable duplicate data transmission and reception for safety's sake.

DI/DO control circuits 20a and 20b for peripheral equipment are provided in a duplicate manner, interlocking switches 23a and 23b are connected to their corresponding receivers 21a and 21b of the DI/DO control circuits 20a and 20b, and corresponding drivers 22a and 22b are connected with relays 24a and 24b, respectively, whose respective contacts 25a and 25b are connected in series. Further, the DI/DO control circuits 20a and 20b are connected to a CNC device 10 by means of communication lines, individually. Even if the contact 25a of the relay 24a is continually in ON state due to failure of the relay 24a, for example, the relay 24b can operate normally, so that power cannot be connected until the contact 25b is turned on, therefore, safety can be secured. Moreover, even if the switch 23a is always in ON state due to its failure, as far as the switch 23b is normal, the CNC device 10 never concludes that the switch is in ON state unless the switch 23b is turned on. Accordingly, safety can be secured.

Thus, in the arrangement in which the switches are expected to be duplicated in consideration ofsafety standards for safety's sake, all the elements including a controller 10, such as a CNC device, switches and relays are duplicated.

According to the prior art, cables of the communication lines for connecting DI/DO control circuits and a controller, as well as switches and other devices that require duplication, are duplicated, so that the system is complicated and costs high.

### DISCLOSURE OF THE INVENTION

The object of the present invention is to simplify connection for data transmission and reception between a controller for controlling a machine or device and a peripheral equipment, in a data transmission apparatus for transmitting and receiving data with the controller and an input-output circuit for peripheral equipment control duplicated.

In order to achieve the above object, in a data transmission apparatus which transmits and receives data in the state where a controller for controlling a machine or device and an input-output circuit for peripheral equipment control are duplicated, according to the present invention, two data made independent by the duplication are synthesized and transmitted on the data transmission side and then this synthesized data is received and restored on the data reception side.

According to the present invention, safety can be secured for those elements which are expected to be safe, wires connected to the controller can be reduced in number, and the connection between the controller and peripheral equipment can be simplified. A communication control unit of the controller and a DI/DO control circuit for the peripheral equipment can be composed of one chip each, so that the equipment can be simplified.

### BRIEF DESCRIPTION OF THE DRAWINGS

FIG. 1 is a block diagram showing an outline of a data transmission apparatus according to the present invention;
FIG. 2 is a block diagram showing an arrangement of a communication control unit provided in a controller, which constitutes the data transmission apparatus according to the present invention;
FIG. 3 is a block diagram of a DI/DO control circuit for peripheral equipment, which constitutes the data transmission apparatus according to the present invention;
FIG. 4A is a diagram for illustrating two data transmitted and received by the data transmission apparatus according to the present invention;
FIG. 4B is a diagram for illustrating the state of one serial data obtained by synthesizing the two data of FIG. 4A;
FIG. 5A is a diagram for illustrating two data transmitted and received by the data transmission apparatus according to the present invention, one of the two data being longer than the other;
FIG. 5B is a diagram for illustrating the state of one serial data obtained by synthesizing the two data of FIG. 5A; and
FIG. 6 is a block showing an outline of a prior art data transmission apparatus.

### BEST MODE FOR CARRYING OUT THE INVENTION

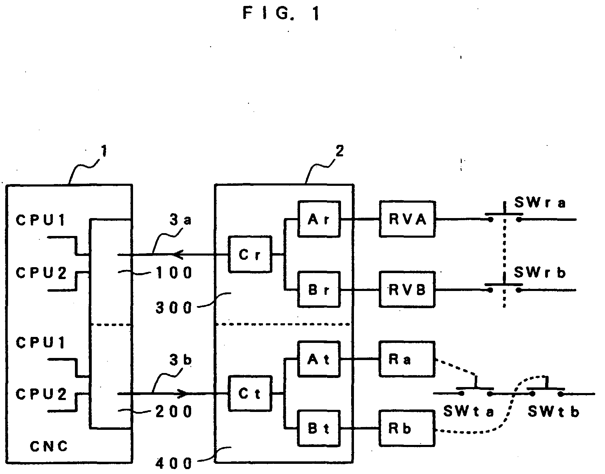

Referring first to FIG. 1 an outline of a data transmission apparatus according to the present invention will be described.

A controller, such as a CNC device, includes a communication control unit 1 for communication with peripheral equipment. The communication control unit 1 is composed of a receiver section 100 and a transmitter section 200. The DI/DO control circuit 2 for peripheral equipment is composed of a transmitter section 300 and a receiver section 400. The receiver section 100 of the communication control unit 1 is connected to the transmitter section 300 of the DI/DO control circuit 2 by means of one communication cable 3a. Further, the receiver section 200 of the communication control unit 1 is connected to the receiver section 400 of the DI/DO control circuit 2 by means of one communication cable 3b.
(a) Case where data is transmitted from the side of the DI/DO control circuit 2 to the controller:
   Data dt1 inputted from a receiver RVA of the DI/DO control circuit 2 through a switch SWra is converted into serial data in a circuit Ar. Likewise, data dt2 inputted from a receiver RVB through a switch SWrb is converted into serial data in a circuit Br. The serial data dt1 and dt2 that are delivered from the circuits Ar and Br, respectively, are synthesized into serial data dt3 by a circuit Cr and outputted. The output data dt3 is transmitted through the communication cable 3a to be applied to the receiver section 100 of the communication control unit 1 in the controller. On receiving the synthesized serial data dt3, the receiver 100 of the communication control unit 1 divides and distributes it, converts the individual divided serial data into parallel data, and restores the parallel data to signals that are equivalent to the original individual input data dt1 and dt2.
(b) Case where data is transmitted from the controller to the DI/DO control circuit 2:
   The transmitter section 200 of the communication control unit 1 of the controller receives data DT1 from a CPU1 and data DT2 from a CPU2, and synthesizes these data DT1 and DT2 into serial data DT3. This serial data DT3 is transmitted through the communication cable 3b to be applied to a circuit Ct in the receiver section 400 of the DI/DO control circuit 2. The circuit Ct divides this serial data DT3 and distributes it to the data DT1 and DT2. The divided data DT1 and DT2 are converted into parallel data in circuits At and Bt, respectively. Relays Ra and Rb are controlled in accordance with the converted parallel data DT1 and DT2.

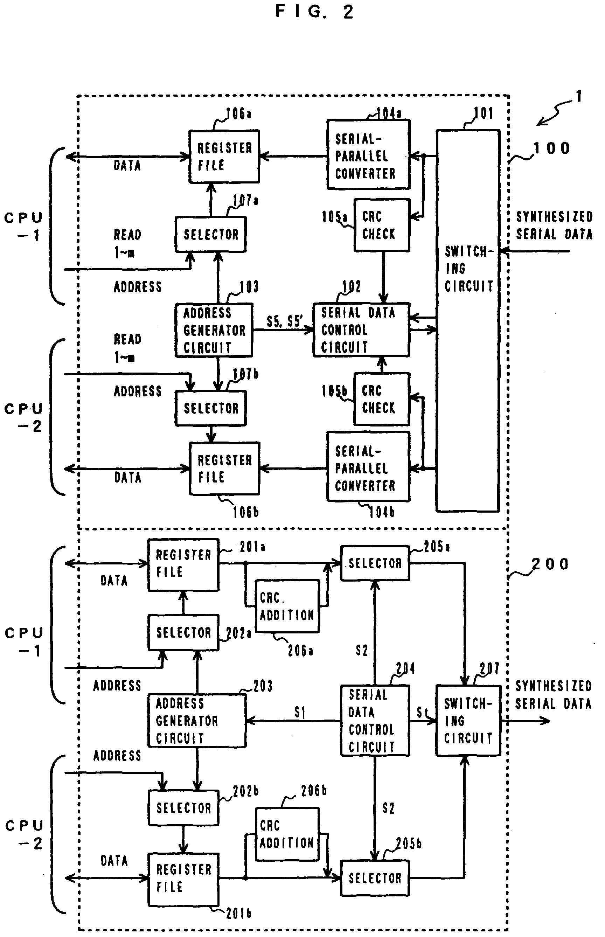

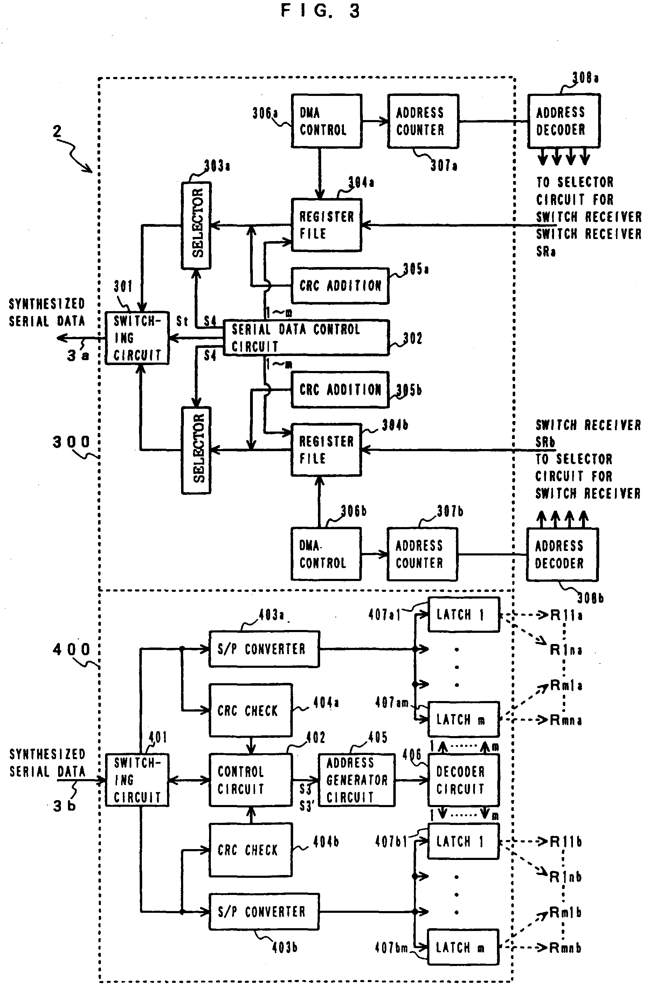

Referring now to FIGS. 2 and 3, a first embodiment of the data transmission apparatus according to the present invention will be described.

Two individual data transmitted and received by the data transmission apparatus are supposed to be two identical data #0 and #1, as shown in FIG. 4A. Each data is composed of a portion for data (DATA) and a portion for a cyclic redundancy check signal (CRC).

The one data #0 (DATA and CRC) is divided with every p number (p is 1 or a greater integer) of bits, the DATA portion includes n number of blocks (#0-1, #0-2, ···, #0-n), and CRC includes k number of blocks (#0-C1, #0-C2 ···, #0-CK). Likewise, the other data #1 (DATA and CRC) is divided with every p number of bits, the DATA portion includes n number of blocks (#1-1, #1-2, ···, #1-n), and CRC includes k number of blocks (#1-C1, #1-C2 ···, #1-CK).

In synthesizing these two individual identical data #0 and #1, the individual blocks of the data #0 and #1 are alternately arranged in regular order in a manner such that the first block (#0-1) of the data #0 is followed directly by the first block (#1-1) of the data #1, then by the second block (#0-2) of the data #0, and then by the second block (#1-2) of the data #1, as shown in FIG. 4B. In FIG. 4B, the overall length of the CRC portion is supposed to be equivalent to p number of bits or less (i.e., k = 1). A start signal St is affixed to the head of the synthesized signal.

The controller, such as a CNC device, is provided with the communication control unit 1 for communication with the peripheral equipment, as shown in FIG. 2. This communication control unit 1 is composed of the transmitter section 200, which synthesizes the two data #0 and #1 (FIG. 4A) delivered from a processor of the controller into serial data, such as the one shown in FIG. 4B, and transmits it to the DI/DO control circuit 2 for peripheral equipment, and the receiver section 100, which restores the synthesized serial data from the DI/DO control circuit 2 to the original data #0 and #1.

The receiver section 100 of the communication control unit 1 is provided with a pair of serial-parallel converters 104a and 104b, a pair of cyclic redundancy check circuits 105a and 105b, a pair of register files 106a and 106b, a pair of selectors 107a and 107b, a switching circuit 101, a serial data control circuit 102, and an address generator circuit 103.

The receiver section 200 of the communication control unit 1 is provided with a pair of register files 201a and 201b, a pair of selectors 202a and 202b, a pair of selectors 205a and 205b, a pair of cyclic redundancy check signal addition circuits 206a and 206b, an address generator circuit 203, a serial data control circuit 204, and a switching circuit 207.

As shown in FIG. 3, on the other hand, the DI/DO control circuit 2 for peripheral equipment is composed of the receiver section 400, which restores the synthesized serial data from the communication control unit 1 of the controller to the original data #0 and #1, and the transmitter section 300, which synthesizes the two data #0 and #1 delivered from the peripheral equipment through switch receivers SRa and SRb into serial data and transmits the serial data.

The transmitter section 300 of the DI/DO control circuit 2 is provided with a pair of selectors 303a and 303b, a pair of register files 304a and 304b, a pair of cyclic redundancy check signal addition circuits 305a and 305b, a pair of DMA control circuits (direct memory access control circuits) 306a and 306b, a pair of address counters 307a and 307b, a switching circuit 301 for outputting synthesized serial data, and a serial data control circuit 302.

The receiver section 400 of the DI/DO control circuit 2 is. provided with a pair of serial-parallel converters 403a and 403b, a pair of cyclic redundancy check circuits 404a and 404b, a switching circuit 401, a serial data control circuit 402, an address circuit. 405, and a decoder circuit 406.

First, operation will be described for synthesizing the two individual data into serial data in the transmitter section 200 of the communication control unit 1, transmitting the serial data to the receiver section 400 of the DI/DO control circuit 2, and then restoring the synthesized serial data to the two individual data.

The transmitter section 200 of the communication control unit 1 includes the register files 201a and 201b. Each of the register files 201a and 201b is provided with m number of registers having (n × p) number of bits. The processor (CPU1) of the controller, such as a CNC device, orders an address to the selector 202a and delivers data to the register file 201a. The selector 202a assigns a register of the register file 201a in accordance with the ordered address and loads the register with data. Thereafter, the processor (CPU1) of the controller successively loads the registers No. 1, 2, 3 ···, m of the register file 201a with data in like manner. Another processor (CPU2) for monitoring the operation of the processor (CPU2) orders an address to the selector 202b in like manner and successively loads the register file 201b with data.

The serial data control circuit 204 delivers a read command S1 to the address generator circuit 203 with every predetermined period, delivers a write command S2 to the selectors 205a and 205b, and further delivers the start signal St to the output switching circuit 207. The address generator circuit 203 successively delivers the same commands for selecting the registers No. 1, 2, 3 ···, m to the selectors 202a and 202b every time the read command S1 is received. Thereupon, the selectors 202a and 202b select the ordered registers of the register files 201a and 201b and cause data stored in the registers to be transmitted to the selectors 205a and 205b. The cyclic redundancy check signal CRC is added to the tail of the data by means of the cyclic redundancy check signal addition circuits 206a and 206b and is transmitted to the selectors 205a and 205b. The data and signal transmitted to the selectors 205a and 205b are stored therein.

On receiving the start signal St from the serial data control circuit 204, the switching circuit 207 delivers the start signal St to the communication line 3b and then alternately delivers the data to be stored in the selectors 205a and 205b to the communication line 3b with every p number of bits, thereby forming synthesized serial data. The synthesized serial data is delivered to the side of the DI/DO control circuit 2 for the peripheral equipment through the communication line 3b.

If the data stored in the selectors 205a and 205b are represented by the data #0 and #1 shown in FIG. 4A, respectively, #0-1 of p number of bits is first transmitted born the selector 205a to the switching circuit 207, then #1-1 of p number of bits born the selector 205b is transmitted, and then #0-2 of p number of bits from the selector 205a is transmitted. Thereafter, #1-2, #0-3, ···, #0-n, #1-n are alternately transmitted from the selectors 205a and 205b. Then, #0-C1 for p number of bits of the cyclic redundancy check signal and then #1-C1 for p number of bits of the cyclic redundancy check signal are transmitted born the selectors 205a and 205b, respectively. Thereafter, #0-C2, #1-C2, ···, #0-CK, #1-CK are alternately transmitted from the selectors 205a and 205b.

The synthesized serial data thus transmitted through the communication line 3b is received by the switching circuit 401 of the receiver section 400 of the DI/DO control circuit 2 for peripheral equipment.

On receiving the start signal St through the switching circuit 401, the serial data control circuit 402 of the receiver section 400 gives a switching command to the switching circuit 401. On the other hand, the switching circuit 401 changes the received serial data (FIG. 4B) with every p number of bits and delivers it alternately to the serial-parallel converters 403a and 403b. Thus, #0-1 for the first p number of bits of the serial data and #1-1 for the next p number of bits are delivered to the serial-parallel converters 403a and 403b, respectively. Further, the cyclic redundancy check circuits 404a and 404b are also alternately outputted with every p number of bits. Then, data transmission errors are detected in the cyclic redundancy check circuits 404a and 404b in accordance with the cyclic redundancy check signal CRC delivered at the end of one block. If there are no errors, an address update signal S3 and a write command signal S3' are delivered to the address circuit 405. If any data transmission errors are detected in the cyclic redundancy check circuits 404a and 404b, only the address update signal S3 is outputted, and the write command signal S3' is not.

The address generator circuit 405 causes the address that circulates by 1, 2, 3 ···, m every time the address update signal S3 is received to inch by one. On receiving the write command signal S3', the address generator circuit 405 delivers the inched address to the decoder circuit 406. The decoder circuit 406 assigns one of latch circuits 407a1, 407a2, ···, 407am and one of latch circuits 407b1, 407b2, ···, 407bm corresponding to the received address, delivers a write command, and loads the assigned latch circuit with the individual parallel data stored in the serial-parallel converters 403a and 403b. When the data are thus stored in the one of the latch circuits 407a1, 407a2, ···, 407am and one of the latch circuits 407b1, 407b2, ···, 407bm, an actuator (relay) corresponding to the latch circuit is controlled in accordance with the storage content of the latch circuit.

If the synthesized serial data transmitted through the communication line 3b is data for p = 1 (i.e., if any of data #0-1, #1-1, #0-2, #1-2, ···, #0-n, #1-n is 1-bit data), for example, the switching circuit changes the serial data with every one bit and first loads the latch circuits 407a1 and 407b1 with it through the serial-parallel converters 403a and 403b. Thereupon, relays R11a, R12a, ···, R1na and relays R11b, R12b, ···, R1nb corresponding to the individual bits (1, 2, 3 ···, n) of the latch circuits 407a1 and 407b1 are turned on or off, depending on the storage contents thereof. Since the contacts of the corresponding relays (i.e.,relays R11a and R11b, R12a and R12b, ···, R1na and R1nb) are connected in series, the actuator and a power source that are to be connected by means of the relay contacts are connected only when the two contacts are both on. Even if the relay R11a is in ON state due to its failure or the like although the storage contents of the latch circuits 407a and 407b are commands to turn off the relays R11a and R11b, the relay R11b is turned off, so that the actuator cannot be connected to the power source, thereby, safety is secured.

The following is a description of operation for synthesizing the two individual data applied to the transmitter section 300 of the DI/DO control circuit 2 into serial data, transmitting the serial data to the receiver section 200 of the communication control unit 1, and then restoring the serial data to the two individual data.

The transmitter section 300 of the DI/DO control circuit 2 includes the register files 304a and 304b. Each of the register files 304a and 304b is provided with m number of registers having (n × p) number of bits. The DMA control circuits 306a and 306b successively deliver the addresses for 1, 2, 3 ···, m to the register files 304a and 304b for each predetermined time with every fixed period, thereby assigning the registers, and deliver pulses to the address counters 307a and 307b every time the addresses are outputted. The address counters 307a and 307b count the input pulses and cyclically count for 1, 2, 3 ···, m. The outputs (count values) of the address counters 307a and 307b are decoded in address decoders 308a and 308b and delivered to selector circuits for the switch receivers. Signals born the selected switch receivers SRa and SRb are loaded individually into the registers of the then selected register files 304a and 304b. Thereafter, the registers No. 1, 2, 3 ···, m of the register files 304a and 304b are stored individually with the signals from the switch receivers SRa and SRb.

On the other hand, the serial data control circuit 302 delivers the addresses for 1, 2, 3 ···, m to the register files 304a and 304b for each predetermined time, with the same period as the fixed period for the delivery of the addresses for 1, 2, 3 ···, m to the register files 304a and 304b by the DMA control circuits 306a and 306b and also with time lags, and reads out data to be stored in the registers of the selected addresses of the register files 304a and 304b. The serial data control circuit 302 is designed to select the first addresses of the register files 304a and 304b when the DMA control circuits 306a and 306b assigns the first addresses so that the data from the switch receivers a and b are stored in the registers for those addresses and then selects the second addresses, for example. Thus, the serial data control circuit 302 assigns the same addresses with time lags for one to three address assignment periods behind the DMA control circuits 306a and 306b.

Further, the serial data control circuit 302 delivers a read command S4 to the selectors 303a and 303b every time the addresses are delivered to the register files 304a and 304b, and loads the selectors 303a and 303b with the data to be stored in the registers of the assigned addresses of the register files 304a and 304b. Then, the serial data control circuit 302 delivers the start signal St to the switching circuit 301. On receiving the start signal St, the switching circuit 301 affixes the start signal to the head and alternately delivers the data stored in the selectors 303a and 303b to the communication line 3a with every p number of bits. If the data #0 and #1 are stored in the register files 304a and 304b, respectively, for example, the start signal St is first affixed, as shown in FIG. 4B. Thereafter, #0-1 of p number of bits is first transmitted born the register file 304a, then #1-1 of p number of bits is transmitted from the register file 304b, and then #0-2 of p number of bits is transmitted from the register file 304a. Thereafter, data are alternately transmitted born the register files 304a and 304a with every p number of bits in like manner, and sent as serial data to the controller through the communication line 3a.

In the transmitter section 300 of the DI/DO control circuit 2 for peripheral equipment shown in FIG. 3, the DMA control circuits, address counters, and address recorders are provided in two sets for the switch receivers SRa and SRb. Alternatively, however, these elements may be provided in one set for common use.

The synthesized serial data transmitted through the communication line 3a is received by the switching circuit 101 of the receiver section 100 of the communication control unit 1 of the controller. When the serial data control circuit 102 detects the start signal St in the serial data, though the switching circuit 101 it delivers a switching command to the switching circuit 101. Thereupon, the switching circuit 101 divides the received serial data with every p number of bits, and delivers the divided data alternately to the serial-parallel converters 104a and 104b. In consequence, the serial-parallel converter 104a is loaded with the data #0-1, #0-2, ···, #0-n from the switch receiver SRa, while the serial parallel converter 104b is loaded with the data #1-1, #1-2, ···, #1-n from the switch receiver SRb. Thus, the data #0 is restored in the serial-parallel converter 104a, and the data #1 is restored in the serial-parallel converter 104b.

If no data errors in the cyclic redundancy check signal CRC are detected in the cyclic redundancy check circuits 105a and 105b, the serial data control circuit 102 delivers an address update command S5 and a write command S5' to the address generator circuit 103. If an error is detected in either of the cyclic redundancy check circuits 105a or 105b, moreover, the write command S5' is not outputted, and only the address update command S5 is outputted, whereupon the data concerned is cancelled.

Every time the address update command S5 is inputted, the address generator circuit 103 inches one address to generate the addresses for 1, 2, 3 ···, m cyclically. But, the updated addresses are delivered to the selectors 107a and 107b only when the write command S5' is inputted. The selectors 107a and 107b select the registers of the ordered addresses of the register files 106a and 106b, and load the registers with data that are converted into parallel signals in the serial-parallel converters 104a and 104b. If there is an error in data transmission such that the write command S5' cannot be outputted, the storage contents of the registers of the register files 106a and 106b corresponding to the addresses generated at that time in the address generator 103 are maintained without being updated or changed. Thus, the registers of the addresses 1, 2, 3 ···, m of the register files 106a and 106b are stored individually with the data from the switch receivers SRa and SRb for No. 1, 2, 3 ···, m.

On the other hand, a processor CPU-1 for control outputs the address of a register to be read, and reads out data to be stored in the register for this address of the register file 106a through the selector 107a. Further, a processor CPU-2 for monitoring outputs the same address, and reads out data to be stored in the register for this address of the register file 106b through the selector 107b. One of the two processors CPU-1 and CPU-2 determines whether or not the data read out from the individual processors are identical. If the data are identical, processing is continued as it is, and if not, an alarm is generated.

According to the present embodiment, two processors are provided including a processor for executing ordinary control and a processor for monitoring, and the data stored in the register files 106a and 106b are read out by means of the individual processors. Alternatively, however, data of the same address of the two register files 106a and 106b may be read out by means one processor so that whether or not the read data are identical can be determined.

In the embodiment described above, moreover, the two identical sets of data are transmitted, as shown in FIG. 2. However, the present invention may be also applied to the case where two different sets of data are transmitted.

For example, two data #0 and #1 shown in FIG. 5A may be transmitted and received in predetermined correlation, as shown in FIG. 5B. FIG.5B shows a case of data transmission such that the data #0 is transmitted for p number of bits and the data #1 is then transmitted for (2 × p) number of bits to be synthesized.

## Claims

1. A data transmission apparatus which transmits and receives data in the state where control device for controlling a machine or device and an input-output circuit for peripheral equipment control are duplicated, characterized in that two data made independent by said duplication are synthesized and transmitted on the data transmission side, and then this synthesized data is received and restored on the data reception side.

2. A data transmission apparatus according to claim 1, wherein said duplicated data are divided with every set number of bits and alternately transmitted on the data transmission side, and the received data are alternately distributed with every set number of bits on the data reception side.

3. A data transmission apparatus between a CNC device and peripheral equipment thereof, comprising:
a CNC control device including data synthesizing means for separately receiving a plurality of sets of input data and synthesizing the data to form one set of serial data; and
a DI/DO control circuit for peripheral equipment including means for receiving a set of serial data from said CNC control device, dividing the set of serial data into a plurality of sets of serial data and distributing the sets of serial data, and means for converting the sets of divided serial data into sets of parallel data, respectively.

4. A data transmission apparatus between a CNC device and peripheral equipment thereof, comprising:
a DI/DO control circuit for peripheral equipment including means for separately receiving a plurality of sets of input data and converting them into the forms of serial data respectively and means for synthesizing these sets of data to create one set of serial data and outputting the set of serial data; and
an NC control device including means for receiving a set of serial data born said DI/DO control circuit for peripheral equipment, dividing the set of serial data into a plurality of sets of serial data and distributing the sets of serial data, and means for converting each set of divided serial data into a set of parallel data.
